(19) Europäisches Patentamt
European Patent Office
Office européen des brevets

(11) EP 1 613 176 B1

(12) **EUROPEAN PATENT SPECIFICATION**

(45) Date of publication and mention of the grant of the patent:
**07.03.2007 Bulletin 2007/10**

(21) Application number: **03772593.4**

(22) Date of filing: **04.11.2003**

(51) Int Cl.:
***A23L 1/16*** *(2006.01)*

(86) International application number:
**PCT/IB2003/005514**

(87) International publication number:
**WO 2004/091312 (28.10.2004 Gazette 2004/44)**

(54) **METHOD OF IMPROVING THE HYDRATION OF PASTA AND PREPARATION OF PASTA PRODUCTS**

VERFAHREN ZUM VERBESSERN DER HYDRATION VON TEIGWAREN UND ZUR BEREITUNG DER TEIGENWARENPRODUKTE

PROCEDE POUR AMELIORER L'HYDRATATION DES PATES ALIMENTAIRES ET PREPARATION DE PRODUITS A BASE DE CELLES-CI

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **16.04.2003 US 463204 P**

(43) Date of publication of application:
**11.01.2006 Bulletin 2006/02**

(73) Proprietor: **DANISCO A/S**
**1001 Copenhagen K. (DK)**

(72) Inventor: **HOEGH, Lars,**
**Danisco A/S**
**DK-8220 Braband (DK)**

(74) Representative: **Williams, Aylsa et al**
**D Young & Co**
**120 Holborn**
**London EC1N 2DY (GB)**

(56) References cited:
**US-A- 3 520 702**
**US-A- 4 540 590**
**US-A1- 2003 003 190**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 613 176 B1

## Description

FIELD OF INVENTION

The invention relates to a method for improving hydration of pasta and pasta products, particularly hydration of dried or semi-dried pasta and pasta products.

TECHNICAL BACKGROUND

The hydration of pasta, particularly pre-prepared pasta, more particularly dried or semi-dried pasta, and/or pasta products can be problematic. Typical problems which arise with the hydration of pasta or pasta products include slow hydration rates resulting in slow cooking time and/or poor quality of the final product (usually due to parts of the pasta and/or pasta products not hydrating sufficiently, in other words uneven hydration, thus resulting in a less palatable product, sometimes with a less than acceptable texture and/or mouthfeel (bite)). This may be particularly problematic with pasta and/or pasta products, which are designed to be cooked in a microwave, to be baked, or to be boiled or steamed in water or hot humidified air.

Conventional pasta, such as spaghetti or macaroni, is prepared by forming a dough from wheat flour and sufficient water to provide a total moisture content of about 30%, together with eggs and/or salt. The dough is formed by rolling and cutting, or by extrusion, into the desired shapes, which are then carefully dried to retain a dense, homogeneous texture. Such pasta requires an average cooking time of 10-20 minutes, depending on the shape.

Other pasta products are often referred to as raw pasta products and are defined as the products obtained by extrusion and/or cold rolling of a mix of durum semolina with water, optionally with addition of eggs, powdered eggs, egg yolk and the like. According to regulations their moisture is brought down to 12.5% maximum in a slow-drying process, before eventual packaging. In order to be eaten, such pasta products should be cooked, in boiling salted water, for about 15 minutes. The timing depends mostly on the thickness of the pasta strips, and therefore of the shape.

Pasta is normally manufactured in a process comprising the following steps:

1. Mixing
2. Extruding
3. Drying
4. Packing.

Presently available instant or quick cooking pasta and pasta products are associated with inferior texture and hydration characteristics. Most of these products are made by extrusion cooking or cooking subsequent to extrusion by immersion in boiling water and/or steam cooking.

Extrusion cooking, however, results in deterioration of the pasta texture due to the impact of heat and high shear on the protein matrix prior to and during extrusion. When these products are hydrated, the texture is mushy or soft, and not "al dente". Also, the extrusion cooking process is costly, requiring sophisticated equipment and control systems.

U.S. 3,251,694 describes a pre-cooked macaroni wherein the dough is made in a conventional manner and the fresh pasta is completely pre-cooked and dried at 148-371 °C for about 3 to 9 minutes. The product, however, is expensive because of high processing costs and is limited to pasta shapes that can be extruded with thin walls and still maintain their shape.

US 4,044,165 describes a process of preparing a pre-cooked pasta where the dough is simultaneously cooked and extruded under high pressure, at temperatures ranging between 90°C and 110°C.

US 4,423,082 describes a method for manufacturing quick cooking pasta products wherein the pasta components are initially heated to a temperature above 113°C under specified conditions, cooled to a temperature of 93°C or lower, and extruded. The extruded pasta product is rapidly dried to provide a quick cooking pasta product without checks, blisters or stress cracks.

US 6,541,059 refers to the production of a pre-cooked pasta via a process involving steaming freshly extruded pasta dough, soaking the steamed dough, removing excess moisture from the surface of the pasta dough and toasting.

Several other patents describe pasta products which can be hydrated quickly but they require complete pre-cooking during the manufacturing process. These include US 2,704,723 wherein fresh pasta is immersed in boiling water before drying, and US 4,044,165, US 4,394,397 and US 4,540,592 wherein combinations of heat and mechanical stress are used during extrusion processes to fully pre-cook the pasta products.

All of these products suffer from poor textural qualities and lack of "al dente" bite when hydrated.

The high temperatures in modem drying ovens may also completely change the taste of the pasta or pasta products, because it alters gluten protein of the durum semolina. In particular, the high temperatures change the colour,

texture and taste of the gluten protein. Similarly, any egg white present in the pasta can also be altered when heated, for instance it may change colour, texture and taste. In fact, pasta and/or pasta products heated to such high temperatures loose their flavour, harden and often take longer to cook.

In dried filled pasta, like tortellini for example, the filling is also dry and upon cooking the complete hydration of the filling is often subsequent to that of the pasta envelope. The result is often that in order to achieve acceptable hydration of the filling, the pasta is over-cooked with an inferior mouth feel texture and/or loss of al dente bite.

Today, consumers demand food requiring short preparation time. The problems associated with pasta or pasta products are often related to the hydration (or rehydration) of the pasta or pasta products, these include long cooking times, uneven hydration, poor texture and/or poor mouthfeel (bite). Prior art methods for manufacturing pasta and/or pasta products with shortened cooking times typically involve complicated processing procedures (which can adversely affect the pasta and/or pasta products) and often lead to products with inferior texture, in particular which lack an al dente texture.

Japanese abstract 58009662 discloses the use of a quality improver for imparting swelling and moistening properties to noodles.

The present invention aims to overcome one or more of the problems associated with hydration of pasta and/or pasta products.

## SUMMARY OF THE INVENTION

In a first aspect, the present invention provides a method of improving the hydration of pasta or pasta products, comprising adding to the pasta or to pasta dough ingredients or to pasta dough an effective amount of an oxidoreductase which is at least capable of oxidising a carbohydrate.

In a further aspect, the present invention provides a method of improving the hydration of pasta or pasta products, comprising adding to the pasta or to pasta dough ingredients or to pasta dough an effective amount of an oxidoreductase which is least capable of oxidising maltose.

According to a further aspect of the present invention there is provided the use of an effective amount of an oxidoreductase which is at least capable of oxidising a carbohydrate in pasta or pasta dough, whereby said oxidoreductase provides the technical effect of improving the hydration of the pasta or of a pasta product made from said pasta or said pasta dough.

The present invention yet further provides, in another aspect, the use of an effective amount of an oxidoreductase which is at least capable of oxidising maltose in pasta or pasta dough, whereby said oxidoreductase provides the technical effect of improving the hydration of the pasta or of a pasta product made from said pasta or said pasta dough.

In a further aspect, the present invention provides a method of preparing pasta or a pasta product with improved hydration, whereby an oxidoreductase which is at least capable of oxidising a carbohydrate is added to pasta or pasta dough ingredients or pasta dough in an effective amount, such that when the pasta or pasta made from said pasta dough or said pasta dough ingredients or a pasta product made from said pasta or said pasta dough ingredients or said pasta dough are cooked the hydration of the pasta or the pasta product is improved as compared with pasta or a pasta product without said oxidoreductase.

The present invention yet further provides, in a further aspect, a method of preparing pasta or a pasta product with improved hydration, whereby an oxidoreductase which is at least capable of oxidising maltose is added to pasta or pasta dough ingredients or pasta dough in an effective amount, such that when the pasta or pasta made from said pasta dough or said pasta dough ingredients or a pasta product made from said pasta or said pasta dough ingredients or said pasta dough are cooked the hydration of the pasta or the pasta product is improved as compared with pasta or a pasta product without said oxidoreductase.

In a further aspect the present invention yet further provides an improved method for drying pasta or pasta products, wherein an oxidoreductase which is at least capable of oxidising a carbohydrate (preferably which is at least capable of oxidising maltose) is added to the pasta, pasta dough, or pasta dough ingredients in an effective amount, and the pasta or pasta products are heated to temperatures below 100°C, preferably below 90°C, preferably below 80°C, preferably below 70°C.

## DETAILED DISCLOSURE OF THE INVENTION

In one aspect suitably the oxidoreductase may be selected from one or more of the following oxidoreductases: glucose oxidase (E.C. 1.1.3.4), hexose oxidase (E.C. 1.1.3.5), galactose oxidase (E.C. 1.1.3.9), pyranose oxidase (E.C. 1.1.3.10), L-sorbose oxidase (E.C. 1.1.3.11), cellobiose oxidase (E.C.1.1.3.25).

Suitable enzymes for use in accordance with the present invention and/or for use in the method of the present invention include (but are not limited to) an enzyme selected from the group consisting of the hexose oxidase disclosed in WO96/39851, the carbohydrate oxidase disclosed in EP 1 041 890, the glucooligosaccharide disclosed in Lin S.F. *et*

*al* Biochim. Biophys. Acta 1991 (Dec 11); 1118(1):41-47. Each of these references in incorporated herein by reference.

In some aspects of the present invention, preferably the oxidoreductase is hexose oxidase (D-hexose:oxygen 1-oxidoreductase, E.C.1.1.3.5). Hexose oxidase is capable of oxidising maltose. Hexose oxidase in the presence of oxygen is capable of oxidising D-glucose and several other reducing sugars including maltose, lactose, galactose, xylose, arabinose and cellobiose to their corresponding lactones with subsequent hydrolysis to the respective aldobionic acids. Accordingly, hexose oxidases differ from glucose oxidase which can only convert D-glucose, in that hexose oxidases can utilise a broader range of sugar substrates. The oxidation catalysed by the enzyme can be illustrated as follows:

D-Glucose + $O_2$ ----> δ-D-gluconolactone + $H_2O_2$,

or

D-Galactose + $O_2$ ----> γ-D-galactogalactone + $H_2O_2$

Suitably, the oxidoreductase according to the present invention is capable of oxidising maltose.

Preferably, the oxidoreductase according to the present invention is capable of oxidising the carbohydrate (preferably maltose) within a pasta dough, pasta or pasta product environment.

Suitably, the oxidoreductase according to the present invention is capable of oxidising at least 0.1%, preferably at least 0.2%, more preferably at least 0.3%, more preferably at least 0.5%, more preferably at least 1%, more preferably at least 2% more preferably at least 5%, more preferably at least 10%, more preferably at least 20%, more preferably at leat 30%, more preferably at least 40%, more preferably at least 50% of the carbohydrates (preferably maltose) within the pasta dough, pasta or pasta product.

For some aspects, the oxidoreductase according to the present invention may not be glucose oxidase (GOX) (E.C. 1.1.3.4).

For some aspect, the oxidoreductase according to the present invention may be one or more of a hexose oxidase or a pyranose oxidase.

Hexose oxidase (which may be referred to hereinafter as "HOX") has been isolated from several red algal species from the family *Gigartinaceae,* which belong to the order *Gigartinales,* such as *Iridophycus flaccidum* (Bean and Hassid, 1956, J. Biol. Chem., 218:425-436) and *Chondrus crispus* (Ikawa 1982, Methods Enzymol., 89:145-149). Additionally, algal species in the order *Cryptomeniales,* including the species *Euthora cristata* (Sullivan et al. 1973, Biochemica et Biophysica Acta, 309:11-22) have been shown to produce HOX.

Other potential sources of hexose oxidase according to the present invention include microbial species or land-growing plant species. Thus, as an example of such a plant source, Bean et al., Journal of Biological Chemistry (1961) 236: 1235-1240, disclosed an oxidoreductase from citrus fruits which is capable of oxidizing a broad range of sugars including D-glucose, D-galactose, cellobiose, lactose, maltose, D-2-deoxyglucose, D-mannose, D-glucosamine and D-xylose. Another example of an enzyme having hexose oxidase activity is the enzyme system of *Malleomyces mallei* disclosed by Dowling et al., Journal of Bacteriology (1956) 72:555-560.

HOX may be isolated and/or purified from natural sources or it may be prepared by use of recombinant DNA techniques.

An enzyme(s) having HOX activity and prepared by recombinant DNA techniques is taught in WO96/40935 The enzyme(s) taught therein may be suitable for use in accordance with the present invention. This document is incorporated herein by reference.

US6251626 discloses a HOX enzyme including sequences, which enzyme may be suitable for use in accordance with the present invention.

The HOX enzyme for use in accordance with the present invention may be a variant or derivative of a natural HOX.

The HOX enzyme, or a variant or derivative of a natural HOX, suitable for use in accordance with the present invention preferably oxidises maltose in the dough.

Preferably, the HOX is added in a substantially pure and/or substantially isolated form. When using natural sources for hexose oxidase, the enzyme is typically isolated from the starting material, such as the algal starting material, by extraction using an aqueous extraction medium. As starting material, algae in their fresh state as harvested from the marine area where they grow may be used and/or algal material which has been dried may be used, e.g. by air-drying the fronds of the algae at ambient temperatures or by any appropriate industrial drying method such as drying in circulated heated air or by freeze-drying. In order to facilitate the subsequent extraction step, the fresh and/or dried starting material may advantageously be comminuted e.g. by grinding or blending.

As the aqueous extraction medium, buffer solutions, e.g. having a pH in the range of 5-8, such as 0.1 M sodium phosphate buffer, 20 mM triethanolamine buffer or 20 mM Tris-HCl buffer, are suitable. The hexose oxidase is typically extracted from the algal material by suspending the starting material in the buffer and keeping the suspension at a

temperature in the range of 0-20°C such as at about 5°C for 1 to 5 days, preferably under agitation.

The suspended algal material is then separated from the aqueous medium by an appropriate separation method such as filtration, sieving or centrifugation and the hexose oxidase is subsequently recovered from the filtrate or supernatant. Optionally, the separated algal material is subjected to one or more further extraction steps.

Since several marine algae contain coloured pigments such as phycocyanins, it may be required to subject the filtrate or supernatant to a further purification step whereby these pigments are removed. As an example, the pigments may be removed by treating the filtrate or supernatant with an organic solvent in which the pigments are soluble and subsequently separating the solvent containing the dissolved pigments from the aqueous medium. Alternatively, pigments may be removed by subjecting the filtrate or supernatant to a hydrophobic interaction chromatography step.

The recovery of hexose oxidase from the aqueous extraction medium is carried out by any suitable conventional method allowing isolation of proteins from aqueous media. Such methods, examples of which are described in detail in WO96/39851 (which application is incorporated herein by reference), include conventional methods for isolation of proteins such as ion exchange chromatography, optionally followed by a concentration step such as ultrafiltration. It is also possible to recover the enzyme by adding substances such as e.g. $(NH_4)_2SO_4$ or polyethylene glycol (PEG) which causes the protein to precipitate, followed by separating the precipitate and optionally subjecting it to conditions allowing the protein to dissolve.

For certain applications of hexose oxidase it is desirable to provide the enzyme in a substantially pure form, e.g. as a preparation essentially without other proteins or non-protein contaminants, and accordingly, the relatively crude enzyme preparation resulting from the above extraction and isolation steps may be subjected to further purification steps such as further chromatography steps, gel filtration or chromato-focusing as also described by way of example in WO96/39851.

Reference is also made herein to the following US applications US SN 60/438,852, US SN 10/001,136 and US SN 60/256,902, and WO02/39828 each of which is incorporated herein by reference, and which relate to the use of HOX in baked products.

Suitably, a single oxidoreductase is used in accordance with the present invention. However, for some aspects more than one oxidoreductase may be used in accordance with the present invention, suitably two or more, or even three or more oxidoreductases may be used.

The oxidoreductase according to the present invention is preferably active *in situ* in the pasta and/or pasta product and/or pasta dough and/or pasta dough ingredients. The term *"in situ"* as used herein means that the oxidoreductase is active within the pasta, pasta product or pasta dough. By active it is meant that the oxidoreductase is capable of oxidising a carbohydrate (preferably maltose) within the pasta, pasta dough or pasta product. This contrasts the situation where the product of the enzyme, such as lactones, i.e. D-glucano-1,5-lactone for example, is produced separately of the pasta, pasta product or pasta dough and is added as formed products to the pasta, pasta product or pasta dough during preparation of the same. In other words, the term "*in situ"* as used herein means that by the addition of the oxidoreductase enzyme according to the present invention to a pasta, pasta product or pasta dough or pasta dough ingredients, the enzyme product, for example D-glucano-1,5-lactone may be produced from components of the pasta, pasta product, pasta dough or pasta dough ingredients, i.e. from a carbohydrate (preferably maltose) presentin the pasta, pastap product, pasta dough or pasta dough ingredients. Suitably, the components of the pasta, pasta product, pasta dough or pasta dough ingredients may be the substrate(s) for the enzyme. If necessary, the components of the pasta, pasta product, pasta dough or pasta dough ingredients may be supplemented by addition of one or more further components which further components may be the same as those present in the pasta, pasta product, pasta dough or pasta dough ingredients or may be additional to those components already present in the pasta, pasta product, pasta dough or pasta dough ingredients.

The term "effective amount" as used herein means an amount which is sufficient to confer to the pasta and/or pasta product improved hydration as defined herein. Suitably, an effective amount of enzyme may be between about 10 and about 10,000 ppm, preferably between about 100 and about 1000ppm, preferably between about 100 and 800ppm, preferably between about 200 and 800ppm a preferably between about 100 to about 600ppm, preferably between about 200 and about 600 ppm, preferably between about 400 and about 600ppm, preferably between about 100 to about 400ppm, preferably between 200 and 400ppm, preferably about 200 to about 300ppm.

In a preferred embodiment of the present invention, the pasta or pasta dough is prepared by mixing flour with water and an effective amount of the oxidoreductase according to the present invention under dough forming conditions. Optionally, egg may also be added during the preparation of the pasta or pasta dough. It is within the scope of the present invention that further components may also be added to the dough mixture.

Typically, such further dough components include conventionally used dough components such as salt, lipid substances, including shortening, margarine, butter or an animal or vegetable oil and one or more dough additives, such as an emulsifying agent, starch degrading enzymes, cellulose or hemicellulose degrading enzymes, proteases, lipases, non-specific oxidising agents, flavouring agents, lactic acid bacterial cultures, vitamins, minerals, leavening agents, baking powder, hydrocolloids such as alginates, carrageenans, pectins, vegetable gums, including for example guar

gum and locust bean gum, and dietary fibre substances.

Conventional emulsifiers used in making dough products include for example monoglycerides, diacetyl tartaric acid esters of mono- and diglycerides of fatty acids, and lecithins e.g. obtained from soya. Among starch degrading enzymes, amylases are particularly useful as dough improving additives. α-amylase breaks downs starch into dextrins which are further broken down by β-amylase to maltose. Other useful starch degrading enzymes which may be added to a dough composition include glucoamylases and pullulanases. In the present context, further interesting enzymes are xylanases and other oxidoreductases such as glucose oxidase, pyranose oxidase and sulfhydryl oxidase.

The enzyme according to the present invention may be used with one or more other suitable food grade enzymes. Thus, it is within the scope of the present invention that, in addition to the enzyme of the invention, at least one further enzyme is added to the foodstuff. Such further enzymes include starch degrading enzymes such as endo- or exoamylases, pullulanases, debranching enzymes, hemicellulases including xylanases, cellulases, lipases, phospholipases, and proteases.

Suitably, protein sources may be optionally added to the pasta, pasta dough or pasta dough ingredients in amounts from about 0.25 to about 10%, preferably 0.5-5%. Typical protein sources include wheat gluten, milk protein, soy protein and eggs in any form including whole eggs, egg whites, powdered eggs, powdered egg white and the like A variety of natural and artificial flavours, herbs, spices, cheeses and the like may also be added to the pasta, pasta dough or pasta dough ingredients in amounts from 0% to about 20%, suitably in amounts of at least about 0.1 %.

A preferred flour for use in accordance with the present invention is wheat flour, preferably Durum wheat flour, i.e. wheat from *Triticum durum,* including semolina flour, but doughs comprising flour derived from other plants, i.e. potato flour, and in particular from other cereal species, such as from rice, maize, barley, rye and durra are also contemplated.

The dough is prepared by admixing flour, water, the oxidoreductase according to the present invention and other optional ingredients and additives. The oxidoreductase can be added together with any dough ingredient including the water or dough ingredient mixture or with any additive or additive mixture. The dough can be prepared by any conventional dough preparation method common in the pasta industry.

The oxidoreductase may be added as a liquid preparation or in the form of a dry powder composition either comprising the enzyme as the sole active component or in admixture with one or more other dough ingredients or additives. The amount of the enzyme component added normally is an amount which results in the presence in the finished dough of 1 to 10,000 units per kg of flour, preferably 5 to 5000 units such as 10 to 1000 units. In some embodiments, the amount is in the range of 20 to 500 units per kg of flour. In the present context 1 oxidoreductase unit corresponds with the amount of enzyme which under specified conditions results in the conversion of 1μmole glucose per minute. The activity is stated as units per g of enzyme preparation.

A suitable assay for determining the activity of the oxidoreductase is detailed hereinbelow. This assay may be referred to hereinafter as the "Oxidoreductase activity assay":

<u>Oxidoreductase activity assay:</u>

The Oxidoreductase activity assay is based on the measurement of hydrogen peroxide generated in the oxidation of glucose. The hydrogen peroxide is oxidised with ABTS in presence of peroxidase to form a dye.

$$\beta\text{-D-glucose} + H_20 + 0_2 \xrightarrow{\text{Oxidoreductase(i.e.HOX)}} \text{D-glucono-delta-lactone} + H_20_2$$

$$H_20_2 + ABTS_{red} \xrightarrow{\text{Peroxidase}} 2\ H_20 + ABTS_{ox}.$$

Reagents:

1)100 mM phosphate buffer, pH 6.3;
2) 55 mM D-glucose (SIGMA, G-8270) in 100 mM phosphate buffer, pH 6.3;
3) ABTS (SIGMA, A 1888), 5.0 mg/ml in distilled water;
4) peroxidase (SIGMA, P-6782), 0.10 mg/ml in 100 mM phosphate buffer, pH 6.3

Substrate:

4.600 ml reagent 2;
0.200 ml reagent 3;
0.200 ml reagent 4

Assay:

290 µl substrate
10 µl enzyme solution

The reaction is initiated by the addition of enzyme solution. The mixture is incubated at 25°C and kinetics of the reaction are measured for 10 minutes on a spectrophotometer (405 nm). The blank sample contains all of the components except for the enzyme solution which is replaced by water. From the measurement the slope of OD/min curve is calculated. Hydrogen peroxide standard curve: A hydrogen peroxide standard curve can be constructed by using varying concentrations of freshly prepared $H_2O_2$ solution (MERCK perhydrol 107298). One unit of enzyme activity is defined as the amount of enzyme which produced 1 µmol of $H_2O_2$ per min at 25°C.

As will be readily understood by a person skilled in the art, in order to determine the specific activity of an enzyme to a carbohydrate substrate other than glucose, for example maltose (i.e. to determine an oxidoreductase which is at least capable of oxidising maltose), the above-mentioned Oxidoreductase activity assay may be used, except that the substrate can be changed from glucose to maltose.

In one embodiment, preferably the pasta or pasta dough comprises one or more emulsifying agents such as one or more of the following emulsifiers: mono- or diglycerides, a sugar ester of fatty acid, polyglycerol esters of fatty acids, lactic acid esters of monoglycerides, acetic acid esters of monoglycerides, polyoxethylene stearates, or lysolecethin.

In one embodiment, preferably the pasta or pasta dough comprises one or more enzymes, in particular one or more lipolytic enzymes. The term "lipolytic enzyme" as used herein refers to an enzyme which is capable of hydrolysing carboxylic ester bonds to release carboxylate (E.C. 3.1.1.X). Examples of suitable lipolytic enzymes include but are not limited to triacylglycerol lipase (E.C. 3.1.1.3), galactolipases (E.C. 3.1.1.26) and phospholipases (E.C. 3.1.1.34 and E.C. 3.1.1.4). The lipolytic enzyme may be isolated and/or purified from natural sources or it may be prepared by use of recombinant DNA techniques.

Preferably, the lipolytic enzyme(s) comprises one or more of the following enzyme activities: triacylglycerol lipase (E.C. 3.1.1.3), phospholipase A2 (E.C. 3.1.1.4), galactolipse (E.C. 3.1.1.26) and phospholipase Al (E.C. 3.1.1.32) activity.

Lipolytic enzymes that are useful in the present invention can be derived from a bacterial species, a fungal species, a yeast species, an animal cell and a plant cell. Whereas the enzyme may be provided by cultivating cultures of such source organisms naturally producing lipolytic enzymes, it may be more convenient and cost-effective to produce it by means of genetically modified cells such as it is described WO 98/00136. The term "derived" may imply that a gene coding for the lipolytic enzyme is isolated from a source organism and inserted into a host cell capable of expressing the gene.

WO 02/03805 teaches some of the sources of lipolytic enzymes. The lipolytic enzymes that are taught therein are incorporated herein by reference.

EP 0 869 167 and EP 1 131 416 teach suitable lipolytic enzymes for us in accordance with the present invention. The lipolytic enzymes that are taught therein are incorporated herein by reference.

Thus, in one embodiment, the present invention provides a method of improving the hydration of pasta and/or pasta products, comprising adding to the pasta or the pasta dough ingredients or the pasta dough and effective amount of an oxidoreductase which is at least capable of oxidising a carbohydrate (preferably maltose), and an emulsifying agent and/or a lipolytic enzyme.

In another aspect, the present invention provides the use of an effective amount of an oxidoreductase which is at least capable of oxidising a carbohydrate (preferably maltose) together with an emulsifying agent and/or a lipolytic enzyme in pasta and pasta dough, whereby said oxidoreductase in combination with the emulsifying agent and/or lipolytic enzyme provides the technical effect of improving the hydration of pasta or pasta products made from said pasta or said pasta dough.

In a yet further aspect, the present invention provides a method of preparing pasta or a pasta product with improved hydration, whereby an oxidoreductase which is at least capable of oxidising a carbohydrate (particularly maltose) in combination with an emulsifying agent and/or a lipolytic enzyme is added to pasta or pasta dough ingredients or pasta dough in an effective amount, such that when the pasta or pasta made from said pasta dough or said pasta dough ingredients or a pasta product made from said pasta or said pasta dough ingredients or said pasta dough are cooked the hydration of the pasta or the pasta product is improved as compared with pasta or a pasta product without said oxidoreductase and emulsifying agent and/or lipolytic enzyme combination.

The present invention relates to improving the hydration of pasta and/or pasta products. The term "improving" as used herein means that the hydration of pasta and/or pasta products comprising the oxidoreductase according to the present invention is improved as compared with the hydration of pasta and/or pasta products which do not comprise the oxidoreductase, but which are otherwise identical to the pasta and/or pasta products comprising the oxidoreductase.

The term "improving the hydration" as used herein means one or more of the following: improving the rate of hydration (i.e. increasing the speed with which the pasta and/or pasta product absorbs water into the pasta) and/or improving the quality of the hydration (i.e. the evenness of the hydration and/or the texture/mouthfeel of the final product for example, including al dente firmness). In one embodiment, this may mean that the hydration takes place at the same rate, or substantially the same rate, over the whole pasta or pasta product and/or that the final hydrated product has the requisite degree of hydration all over (or substantially all over) the pasta or pasta product. In other words, the "hydrated" pasta or pasta product preferably has no, or substantially no, parts thereof which remain unhydrated or partially unhydrated. In other words, preferably it is uniformly hydrated.

The effect of the oxidoreductase on the hydration of pasta and/or pasta products can be measured by standard methods. In particular, the "rate of hydration" can be assessed by comparing the optimal cooking time of pasta or pasta products comprising the oxidoreductase of the present invention compared with that of pasta or pasta products without the enzyme. The rate of hydration is measured from the initiation of hydration (e.g. boiling/microwaving/baking etc.) until the optimum cooking time is reached. Optimal cooking time of the pasta can be evaluated using one or more of the standard methods described below.

In the evaluation of pasta quality it is important that pasta or pasta products have one or more (preferably two or more, preferably three or more, preferably all) of the following characteristics: the uncooked pasta should be mechanically strong, so that it will retain its size and shape during packaging and shipment; the pasta and/or pasta products should be uniformly yellow; when cooked in boiling water, the product should maintain its shape with no splitting or falling apart; the cooked pasta or pasta product should give a firm bite (al dente); the surface of the cooked pasta or pasta product should be non sticky; the cooking water should be free of starch; the pasta should be resistant to overcooking.

Suitably, the "quality of hydration" can be measured by evaluating the bite of the pasta once cooked. A cooked pasta should have a slight bite, which is not mushy and not overly tough. This is often referred to as an al dente bite. In addition or alternatively, the "quality of hydration" can be evaluated by measuring the evenness of hydration. These characteristics can be measured using one or more of the standard methods taught below.

As there are so many different types and shapes of pasta the optimal cooking time will have a high variation from type to type.

Pasta is therefore normally evaluated at the optimal cooking time + an "overcooking time", which is the optimal cooking time + x extra minutes.

Standard methods for determining the optimal cooking time include:

The chewing method wherein 25 grams of dry pasta is cooked in a beaker containing 300 ml of boiling distilled water. A timer is started and pieces of cooked pasta are removed from the cooking water at 30 second intervals. The pieces are chewed between molar teeth. The optimum cooking time is the time when no hard core is detected for the first time.

The squeeze method wherein 25 g of dry pasta is cooked in a beaker containing 300 ml of boiling distilled water. A timer is started and pieces of cooked pasta are removed from the cooking water at 30 second intervals and placed between two pieces of clear plastic. The optimum cooking time is the time when the white central core of uncooked pasta disappears for the first time. (See Method 66-50, AACC in the 1995 Edition of Methods of the American Association of Cereal Chemists, 3340 Pilot Knob Road, St. Paul, Minn. 55121 USA).

Pasta cooked for the optimal cooking time is associated with a specific preferred mouth feel texture referred to as al-dente or firmness. Pasta which is cooked beyond the optimal cook time becomes over-cooked and this is associated with a loss of the al-dente texture and a poor quality final prepared product.

Hydration of pasta or pasta products is preferably uniform across the whole pasta or pasta product. However, hydration of pasta and pasta products can be uneven. In particular, dried pasta or pasta products comprising pasta in juxtaposition with a composition, such as a filling or sauce composition, often hydrate unevenly. Uneven hydration can be determined by the presence of a hard core or white centre core in parts of the pasta whilst other parts have reached the optimal cooking time. This is easily monitored by analysing different parts of a piece of pasta or pasta product during cooking and comparing the presence of hard core or white centre by the above methods. Uneven hydration is problematic in the preparation of pasta or pasta products as it requires the over-cooking of part of the pasta in order to ensure the entire pasta is cooked, with resultant loss of overall quality, firmness and al-dente texture. In dried filled pasta or pasta products for example, in order to achieve hydration and heating of the filling upon cooking, it is often necessary to overcook the pasta shell (or pasta parcel) surrounding the filling, resulting in a pasta product with poor texture, poor firmness and lack of al-dente bite. This problem in hydrating dried filled pasta or pasta products is especially severe when the

pasta shell (or parcel) is sealed, such as with ravioli or tortellini for example, and/or with cooking methods that do not result in agitation/direct water penetration through the pasta shell (or parcel), for example microwave cooking or baking. This problem is particularly noticeable in pre-prepared filled pasta or pasta products where the filled pasta or pasta product pre-hydration is within a sauce and is designed to be simply microwaved or baked by the consumer.

Although not wishing to be bound by theory, it would appear that the presence of an oxidoreductase according to the present invention, in particular HOX, affects proteins, and in particular gluten in the pasta, thus resulting in an improved gluten network, this surprisingly affects the capillary effect of the pasta, which results in a faster uptake of water during the cooking of the pasta or pasta products until the temperature for the coagulation of the proteins is reached. Thus, in one embodiment the present invention relates to a pasta or pasta product, particularly a filled pasta product, wherein the water penetration through the pasta is enhanced compared with a filled pasta product comprising pasta which does not comprise an oxidoreductase. Thus in one embodiment of the present invention in pasta products comprising pasta in juxtaposition with a composition, such as a filling or sauce composition, particularly filled pasta products, the pasta itself may retain less water, but the penetration of the water through the pasta to the filling may be enhanced.

Cooked yield may be determined by adding 10 grams of the dry pasta to 300 grams of boiling distilled water and cooking for the optimum cooking time as determined above. Then the cooked pasta is drained on a sieve for 5 minutes and weighed. The cooked yield of the pasta is reported as a percentage of the initial dry pasta weight of 10 grams. Preferably, the cooked yield of the pasta of the present invention is from about 315% to about 450%, preferably from about 330% to about 425%.

Surprisingly it has been found that pasta or pasta products, in particular dried or semi-dried pasta or pasta products, prepared by the method of the present invention may have a shorter optimal cooking time, preferably the optimal cooking time may be reduced by up to 5%, preferably 5-10%, preferably 10-20%, preferably 20-30%, preferably 30-40%, preferably 40-50%, preferably 50-60%, preferably 60-70%, preferably 70-80%, preferably 80-90%, preferably 90-100%

Suitably, the optimal cooking time may be reduced by at least 5%, preferably at least 10%, preferably at least 20%, preferably at least 30%, preferably at least 40%, preferably at least 50%, preferably at least 60%, preferably at least 70%, preferably at least 80%, preferably at least 90%, preferably at least 100%

Surprisingly is has been found that pasta or pasta products, and in particular dried or semi-dried pasta or pasta products, prepared by the method of the invention may have a more even hydration as compared with pasta or pasta products not comprising the oxidoreductase according to the present invention, resulting in a higher quality mouthfeel of the final cooked product.

Surprisingly is has been found that pasta or pasta products, and in particular dried or semi-dried pasta or pasta products, prepared by the method of the invention may have a higher degree of firmness. The firmness of the pasta or pasta product may be determined using the AACC method 66-50. Preferably the firmness of the pasta or pasta product is improved compared with pasta or pasta product without oxidoreductase. Preferably, the cooked pasta in accordance with the present invention has an al dente firmness at its optimum cooking time.

The present invention is particularly suitable for use with pasta and/or pasta products which are dried or semi-dried. However, the present invention may be used with any type of pasta dough with the aim of improving the hydration thereof. Types of pasta which are encompassed by the present invention include, but are not limited to, fresh pasta, pre-prepared pasta, semi-dried pasta, dried pasta. Thus, the present invention is highly suitable for any conventional type of pasta or pasta product.

In fresh pasta the oxidoreductase may not overall increase (and may even decrease) the water content of the pasta (following cooking). However, in such fresh pasta the inclusion of the oxidoreductase (in particular HOX) has been found to surprisingly delay starch gelatisation and to decrease the peak viscosity, which has been found to improve the final texture of the cooked pasta comprising oxidoreductase (in particular HOX) as compared with cooked pasta without oxidoreductase. In fresh pasta, and in particular in filled fresh pasta, i.e. in ravioli and tortellini, the inclusion of the oxidoreductase (in particular HOX) results in an increased firmness and an improved texture of the product, in particular the moisture is maintained within the filling. Without wishing to be bound by theory, the oxidoreductase may function to reduce water uptake in the fresh pasta from the filling and therefore filling moisture is maintained. The reduction in water uptake in fresh pasta by use of the oxidoreductase may be due to the fact that less starch is gelatinised.

Suitably, however, the present invention may relate to the hydration of dry or semi-dry pasta or pasta products, wherein the pasta contained therein is in a dry or semi-dry state. Preferably, the present invention relates to the hydration of dried pasta.

The term "dry pasta or pasta products" as used herein refers to products where the pasta contained therein has a moisture content of about 13% or less than, typically about 10 to about 12%.

Fresh pasta dough preferably has a moisture content of from about 15% to about 35%. The moisture content of freshly extruded pasta products are from about 15% (semi-dry) to about 34% (wet/moist/fresh), preferably from about 26 to about 33% and most preferably from about 28% to about 32% moisture.

The water content of pasta may be determined using the methodology taught in AACC method 44-01 (see 1995 Edition of Methods of the American Association of Cereal Chemists, 3340 Pilot Knob Road, St. Paul, Minn. 55121 USA): for oven-drying methodologies the sample is heated for X amount of time at X°C, and the loss of weight is used to calculate the moisture content of the sample using the following formulae:

$$\text{\% Moisture (wt/wt)} = \frac{\text{(wt of wet sample - wt of dry sample)}}{\text{wt of wet sample}} \times 100$$

By way of example only, the present invention is suitable for use with the following pastas and/or pasta products: fusilli, tagliatelle, spaghetti, bucatini, fettuccine, fusilli, lasagne sheets, linguine, mafaldina, shells (both large and small), elbows, vermicelli, ravioli, raviolini, agnolotti, pansotti, cappeletti, tortellini, gnocchi, cannelloni, couscous and manicotti.

In one embodiment, the present invention is particularly relevant for pasta products comprising pasta in juxtaposition with a composition, such as a filling composition and/or a sauce composition for example. This may include pasta products wherein the pasta is placed within a sauce composition, e.g. pasta bakes for example, or layered pasta products comprising layers of pasta and layers of a filling composition and/or a sauce composition, such as lasagne for example, or stuffed pasta products, such as sealed or unsealed pasta "parcels" comprising a filling composition and/or a sauce composition.

In some embodiments the present invention is particularly relevant for stuffed pasta products, for example one or more of the following pasta products: ravioli, raviolini, agnolotti, pansotti, cappeletti, tortellini, gnocchi, cannelloni, stuffed shells and manicotti. The term "stuffed" pasta is synonymous with the term "filled" pasta and these terms are used interchangeably herein.

As will be readily appreciated by those skilled in the art, the composition, such as the filling composition and/or the sauce composition used in pasta products may be meat, vegetable, fruit (in particular tomato) and/or cheese based.

The present invention is suitable for use with all sizes of pasta or pasta products. By way of example only, the present invention is suitable for use with both "jumbo" (large) raviolli/tortellini, as well as "mini" (small) raviolli/tortellini for example. In some instances, for example, the "jumbo" ravioli/tortellini may comprise filled pasta parcels of about 5-7 cm in diameter, whereas the "mini" ravioli/tortellini may comprise filled pasta parcels of about 2-3 cm in diameter.

When it is the case that the pasta product comprises pasta in juxtaposition with a composition, such as a filling composition and/or a sauce composition, in particular stuffed pasta products, the composition may comprise at least one emulsifier and at least one edible fibre. In one aspect, this is particularly relevant when the filling comprises meat.

Suitably, the process for the preparation of a composition, particularly a filling composition and/or a sauce composition, comprising at least one emulsifier and at least one edible fibre may comprising the following steps: i) providing an initial composition (preferably free or substantially free of free water) comprising the emulsifier in a melted form and the edible fibre; ii) spray crystallising the initial composition such that the emulsifier crystallises and the emulsifier and the edible fibre are integrated, as taught in WO01/05246 (which patent application is incorporated herein by reference).

By the term "free water" it is meant water which is not incorporated within one of the constituents of the initial composition. For example, water may be present in the edible fibre. This is not fee water.

By the term "substantially free of free water" it is meant having a free water content of preferably less than 20 wt%, preferably less than 15 wt%, preferably less than 10 wt%, preferably less than 5 wt%, preferably less than 2 wt %, more preferably less than 1 wt%, more preferably less than 0.5 wt%, yet more preferably less than 0.1 wt%.

By the term "integrated" it is meant that at least some particles of the composition of the present invention comprise both the emulsifier and the edible fibre. Preferably by the term it is meant that the edible fibre is encapsulated by the emulsifier.

The term "edible fibre" is commonly used in the art and is analogous to the term "dietary fibre". By the term "edible fibre" it is meant the edible parts of plants, or analogous carbohydrates, that are resistant to digestion and absorption in the human small intestine with complete or partial fermentation in the large intestine. This is the consensus definition of the American Association of Cereal Chemists (AACC) Dietary Fibre Definition Committee. The term "edible fibre" as used herein may include mixtures of dietary fibre, which may include hydrocolloids such as carrageenan, guar and xanthan gum.

Spray crystallisation process described in WO 01/05246 provides particles which are more uniform and generally more spherical in shape than particles produced by alternative methods. These more regular and more spherical particles have improved flow properties compared to the alternatively produced products. In particular extruded products provide irregular or jagged particles. Such particles have poor flow properties. Moreover, spray crystallisation allows for the

production of particles larger than those which may be provided by spray drying. For example, spray crystallisation may provide particles with an average diameter of 500 to 800 μm. Larger particles generally speaking have improved flow properties and produce less dust on handling.

Thus preferably the composition, particularly the filling composition and/or sauce composition of pasta or pasta products according to the present invention is an integrated composition comprising an emulsifier and an edible fibre. For example, the edible fibre may be encapsulated by the emulsifier.

The term edible fibre includes polysaccharides, oligosaccharides, lignin and associated plant substances.

Preferably, the edible fibre is selected from sugar beet fibre, apple fibre, pea fibre, wheat fibre, oat fibre, barley fibre, rye fibre, rice fibre, potato fibre, tomato fibre, other plant non-starch polysaccharide fibres and combinations thereof.

More preferably the edible fibre comprises at least sugar beet fibre.

Preferably, the emulsifier in the composition, particularly the filling composition and/or the sauce composition, is selected from propylene glycol monostearate (PGMS), sodium stearoyl lactylate (SSL), calcium stearoyl lactylate (CSL), monoglycerides, diglycerides, monodiglycerides, polyglycerol esters, lactic acid esters, polysorbate, sucrose esters, diacetyl tartaric acid esters of mono-diglycerides (DATEM), citric acid esters of monoglycerides (CITREM) and combinations thereof.

The emulsifier of the composition of the present invention may also be selected from DIMODAN including DIMODAN® ES, DIMODAN® B 727 and DIMODAN® PV, DIMODAN® PH 200, DIMODAN® PH300/B, DIMODAN® HR, DIMODAN® PH100/B, DIMODAN® HR75/B, GRINDSTED™ CITREM, GRINDSTED™ GA, GRINDSTED™ PS such as GRINDSTED™ PS 100, GRINDSTED™ PS 200, GRINDSTED™ PS 300, GRINDSTED™ PS 400, GA1250, GA1350, RYLO™ (manufactured and distributed by DANISCO A/S), including RYLO™ AC, RYLO™ CI, RYLO™ LA, RYLO™ MD, RYLO™ MG, RYLO™ PG, RYLO™ PR, RYLO™ SL, RYLO™ SO, RYLO™ TG; and combinations thereof.

The composition may comprise at least two emulsifiers. The composition may comprise three emulsifiers

In addition to the emulsifier and the edible fibre, the composition, particularly the filling composition and/or the sauce composition of the present invention may further comprise an emulsifier improver as taught in WO01/05246. The emulsifier improver may be incorporated in the initial composition and spray crystallised with the composition or may be added after spray crystallisation of the edible fibre and emulsifier.

By the term "emulsifier improver" it is meant a material which enhances the distribution and/or emulsifying action of an emulsifier when compared to the distribution and/or emulsifying action of the emulsifier in absence of the material.

The emulsifier improver may be selected from hydrocolloids, fibres, salts, proteins, sugars and combinations thereof.

In one aspect the emulsifier improver is other than a salt alone. In other words, if the emulsifier improver comprises a salt, the improver comprises at least one further improver other than a salt.

In one further aspect when the emulsifier in the composition is a distilled monoglyceride, the emulsifier improver is other than calcium propionate alone. In other words, when the emulsifier is a distilled monoglyceride, if the emulsifier improver comprises calcium propionate, the improver comprises at least one further improver other than calcium propionate.

The hydrocolloids may be selected from alginate, carrageenan, carboxymethyl cellulose (CMC), guar gum, locust bean gum (LBG), xanthan gum, microcrystalline cellulose (MCC), methyl cellulose (MC), cellulose ethers including hydroxy propyl methyl cellulose (HPMC), pectin, starch including native and modified starch, pregelatinated starch and non-pregelatinated starch, including starch from corn, potato, tapioca, wheat, and rice, gelatin, agar, and combinations thereof.

The fibres may be selected from the fibres described above.

The salts may be selected from baking powder systems, ammonium carbonate, salts in general including sodium chloride, and combinations thereof.

The proteins may be selected from milk proteins, wheat proteins, pea proteins, soy proteins, buckwheat proteins, carob proteins, barley proteins, oat proteins, rice proteins, rye proteins, gelatin, whey proteins, and combinations thereof.

Thus, the present invention encompasses a method of improving the hydration of a pasta product comprising pasta in juxtaposition with a composition, preferably a filling composition and/or a sauce composition, more preferably stuffed pasta products, in particular meat filled pasta products, comprising adding to the pasta or the pasta dough ingredients or the pasta dough an effective amount of an oxidoreductase which is at least capable of oxidising a carbohydrate (preferably maltose) and optionally a lipolytic enzyme and/or an emulsifier; and adding to the composition at least one emulsifier and at least one edible fibre.

In a further embodiment, the present invention encompasses the use of an effective amount of an oxidoreductase which is at least capable of oxidising a carbohydrate (preferably maltose) in combination with a lipolytic enzyme and/or an emulsifier in pasta or pasta dough, and the use of at least one emulsifier and at least one edible fibre in a composition, to provide the technical effect of improving the hydration of pasta products comprised of pasta in juxtaposition with a composition, preferably a filling composition and/or a sauce composition, more preferably stuffed pasta products, in

particular meat filled pasta products.

The present invention is relevant for pasta or pasta products which are intended to be cooked by any method, such as any one of the following methods for example: boiling, microwaving and baking.

In one embodiment the present invention is particularly relevant for pasta or pasta products designed to be microwaved and/or baked. In particular, the present invention is valuable for overcoming hydration problems in pasta and pasta products designed to be microwaved and/or baked.

The term "pasta" or "pasta product" as used herein encompasses pasta and pasta products which are sold in a form which are ready to cook, and include fresh pasta and pasta products, pre-prepared pasta and pasta products, semi-dry pasta and pasta products and dry pasta and pasta products. In addition, these terms may encompass products which are sold as a pasta dough or a pasta dough mixture or pre-mixture, i.e. products which contain all of the dried dough ingredients and/or additives for such a dough.

In one aspect, the present invention relates to an improved method for drying pasta and/or pasta products, the improvement obtained by the addition of the oxidoreductase according to the present invention may be a reduction in the drying temperature compared with temperatures typically used conventional high temperature dryers and/or a reduction in the drying time compared with the drying time typically observed when using conventional drying methods.

When the pasta or pasta product is a dried (or semi-dried) pasta or pasta product, the terms "hydrated" and "hydration" as used herein may be commensurate with the terms "rehydrated" and "rehydration", respectively.

The present invention will now be described, by way of example only, with reference to the following Examples and Figures.

Figure 1 shows a graph of water uptake during boiling of fresh pasta; and

Figure 2 shows a graph of the effect of relative humidity on pasta dough which either comprises HOX or does not comprise HOX (control).

## EXAMPLE 1: FRESH PASTA

Pasta hydration: Starch gelatinisation and protein coagulation typically occurs during cooking of pasta and are the reason for the structural changes in the pasta during cooking. Thus these changes have an impact on the final texture of the cooked pasta or pasta products. The proteins absorb the water faster than the starch. Hydration of the proteins in pasta or pasta products before the beginning of starch gelatinisation is important in order to obtain good and firm cooked pasta.

Preparation of Fresh Pasta:

Recipe:

1000 g flour (durum semolina 2002117)
260 g water
130 g eggs
and optionally 500ppm HOX (in the form of GINDAMYL SUREBake™ 800) (The control does not have HOX added).

Procedure:

The flour is mixed for 1 minute at speed 2 (Bjørn Mixer), water and eggs are added. The mixing is continued for further a 12 minutes.

Water temperature: 18-20°C
Dough temperature: 25-27°C
Sheeting:

The dough is sheeted in reduction rolls (numbers in mm) using a multipurpose pasta machine.
20 (x2)-10 (x2)-5-4-4-fold-3-3-fold-2.5-2-1.8-1
Dough press speed: 40, conveyor speed: 38

Results:

Preliminary results indicated that with the addition of HOX to fresh pasta the starch gelatinisation is delayed. In addition, the peak velocity is decreased. Measurements conducted in the amylograph have illustrated this (see below). Amylograph measurements were performed on 1 day old pasta (both pasta including HOX and pasta without HOX [control]). 90 g of dough was mixed with 460 ml tap water with the Ultra Turrex for 2 min.

| Sample no. | Content | Gelatinisation Temperature (°C) | Peak Temperature (°C) | Peak Viscosity |
|---|---|---|---|---|
| 1 | Control | 73 | 90.3 | 480 |
| 2 | GRINDAMYL SUREBake 800 | 74.5 | 90.3 | 470 |

The effect of the delayed starch gelatinisation by HOX in fresh pasta is also illustrated by the fact that the water uptake during boiling is lower for fresh pasta with HOX, as less starch is gelatinised (see Figure 1).

The strengthening effect of HOX in the pasta is observed by an increased firmness and improved bite (texture) of the pasta. This can be illustrated by Kieffer measurements.

| Sample no. | Content | Kieffer Resistance (g) | Kieffer Extensibility (mm) |
|---|---|---|---|
| 1 | Control | 193±3<br>188±9 | 20±1<br>20±1 |
| 2 | GRINDAMYL SUREBake 800<br>500 ppm | 313±14<br>318±8 | 19±4<br>14±0 |

Preliminary results indicate that HOX improves the hydration of the pasta obtained with the combined effect on both the starch and the proteins in the system.

**EXAMPLE 2: DRIED PASTA**

Fresh pasta is prepared as in Example 1. The fresh pasta is dried using the AACC method 66-42: Micro Scale Pasta processing standard drying protocol. (see 1995 Edition of Methods of the American Association of Cereal Chemists, 3340 Pilot Knob Road, St. Paul, Minn. 55121 USA).

The dried pasta is prepared (cooked) by boiling in water.

The dry pasta is evaluated for optimal cooking time and firmness using the AACC method 66-50 (supra). Preliminary results indicate that the dry pasta containing GRINDAMYL SUREBake 800 500 ppm has a lower optimal cooking time, and a faster rate of hydration, a more even hydration, increased firmness and improved mouth feel/ organoleptic properties (particularly al dente bite properties) when compared to equivalent pasta prepared without the addition of GRINDAMYL SUREBake 800.

**EXAMPLE 3. FRESH FILLED PASTA**

Cannelloni, comprised of pasta (with or without HOX) and a meat filling was produced. The cannelloni was stored overnight at 5°C and subjectively evaluated the next day.

| Sample no. | Content | Evaluation of pasta dough (5°C) |
|---|---|---|
| 1 | Control | Wet on the surface after removal of the meat.<br>The filled pasta "cannelloni" was more fragile and soft. |
| 2 | GRINDAMYL SUREBake 800<br>500 ppm | The dough seems still relatively dry on the surface after removal of the meat.<br>The "cannelloni" was firmer in texture. |

**EXAMPLE 4: DRIED FILLED PASTA**

Fresh pasta dough is made according to Example 1 (with or without HOX) and sheeted in reduction rolls (numbers in mm) using multipurpose pasta machine.20 (x2)-10 (x2)-5-4-4-fold-3-3-fold-2.5-2-1.8-1

Dough press speed: 40, conveyor speed: 38. Optionally GRINDAMYL SUREBake 800 500 ppm is included in the pasta dough recipe.

Meat filling is prepared using the following recipe:

Ingredients

125g pork meat
125g chicken meat
125g beef meat
100g butter
100g mortadella (baloney)
3 tbsp chopped parsley
225g grated Parmesan cheese
3 eggs, lightly beaten
Seasoning

Optionally an emulsifier/edible fibre blend is added. The emulsifier/edible fibre blends used were as follows:

BLEND A: A mixture of 70% GRINDSTED™ GA 1350 (monodiglycerides + SSL + PGMS) from Danisco A/S and 30% Fibrex 595 (sugar beet fibre) from Danisco Sugar AB was prepared. The sugar beet fibres were mixed into the melted emulsifiers and the mix was turned into a fine free-flowing powder by spray crystallisation. The product was used at a dosage of 4%.

BLEND B: A mixture of 70% PANODAN™ (DATEM) supplied by Danisco A/S and 30% Fibrex 595 from Danisco Sugar AB, was prepared. The sugar beet fibre was mixed into the melted DATEM and the mixture was then spray crystallised into a fine free-flowing powder. The product was used at a dosage of 1%

Method:

The meat including the mortadella is roughly chopped into 1-2cm cubes and fried in an open top frying pan until cooked through. The cooked meat is blended in a food processor until a smooth paste is achieved. The Parmesan cheese, eggs, seasoning and optionally one of the emulsifier/fibre blends (taught above) is stirred into the paste. The meat filling is allowed to stand for 2 hours prior to assembly of the filled pasta.

The 3mm pasta sheets are cut into 7cm squares. Exactly 5gms of the meat filling is placed in the centre of each square, one corner is folded over to make a triangle, and the edges are pressed lightly together. The corners of the triangles are brought together to make circular shapes. The tortellini is subsequently dried using AACC method 66-42: Micro Scale Pasta processing standard drying protocol.

The pasta is prepared (cooked) by boiling in water.

Initial results indicate that the tortellini containing GRINDAMYL SUREBake 800 500 ppm in the pasta required a shorter optimal cooking time, and resulted in a more even hydration of the pasta, improved firmness and resulted in improved texture and mouth feel.

At the optimum cooking time for the pasta shell, the meat filling was removed from the tortellini shell and weighed to determine the degree of hydration. Preliminary results indicate that the meat filling in pasta shells containing GRINDAMYL SUREBake 800 500 ppm had a higher degree of hydration, and this effect was further enhanced by the addition of either one of the emulsifier/fibre blends in the meat filling.

Finally a cross-section of tortellini is performed at the optimal cooking time of the pasta shell to determine the evenness of cooking/hydration of the filled tortellini.

The water content of the filling prior and after cooking is measured.

Preliminary results indicate that the inclusion of HOX in the pasta results in a more even hydration of the pasta and meat filling as compared with tortellini without the HOX. In addition, preliminary results indicated that the addition of either of the emulsifier/fibre blends in the meat filling even further enhances the hydration of the meat filling, and results in one or more of a high water content of the filling, an improved rate of hydration of the filling and an improved filling texture.

**EXAMPLE 5: Water Sorption of Pasta Dough**

The response of pasta dough (with or without HOX) to a sudden change in relative humidity has been investigated using an automatic gravimetric water vapour sorption analyzer, SGA-100 from VTI corporation. Under controlled temperature and humidity conditions, the instrument continuously registers any weight change of the dough. The samples are initially exposed to 40% humidity where the samples loose weight due to water evaporation.

The humidity is held constant at 40%RH until the samples have adapted completely to these conditions (i.e. no further weight change is observed) at which time the relatively humidity is changed from 40% to 80% in one sudden step. The samples now absorb water as shown in Figure 2 (see upper graph). The time is set to zero when the %RH changes from 40% to 80%.

When the samples have adapted to the new 80%RH conditions the relatively humidity is changed to 0%RH in one step and the samples now loose water again (see Figure 2, bottom graph). The time is again set to zero when the %RH shifts from 80%RH to 0%H.

The measurements are done at 20°C.

### Claims

**1.** A method of improving the hydration of pasta or pasta products, comprising adding to the pasta or to pasta dough ingredients or to pasta dough an effective amount of an oxidoreductase which is at least capable of oxidising a carbohydrate.

**2.** A method of preparing pasta or a pasta product with improved hydration, whereby an oxidoreductase which is at least capable of oxidising a carbohydrate is added to pasta or pasta dough ingredients or pasta dough in an effective amount, such that when the pasta or pasta made from said pasta dough or said pasta dough ingredients or a pasta product made from said pasta or said pasta dough ingredients or said pasta dough are cooked the hydration of the pasta or the pasta product is improved as compared with pasta or a pasta product without said oxidoreductase.

**3.** A method according to claim 1 or claim 2 wherein the carbohydrate is maltose.

**4.** A method according to claim 1 or claim 2 wherein the oxidoreductase is a hexose oxidase.

**5.** A method according to claim 1 or claim 2 wherein in addition to the oxidoreductase an emulsifying agent or a lipolytic enzyme is added to the dough.

**6.** A method according to claim 1 or claim 2 wherein in addition to the oxidoreductase an emulsifying agent and a lipolytic enzyme is added to the dough.

**7.** A method according to claim 1 or claim 2 wherein the rate of hydration is improved.

**8.** A method according to claim 7 wherein the optimal cooking time is reduced by at least 5%.

**9.** A method according to claim 1 or claim 2 wherein the quality of hydration is improved.

**10.** A method according to claim 9 wherein the evenness of the hydration is improved.

**11.** A method according to claim 9 wherein the texture or mouthfeel of the hydrated pasta is improved.

**12.** A method according to claim 1 or claim 2 wherein the pasta or pasta product is selected from one or more of the groups consisting of: fusilli, spaghetti, tagliatelle, bucatini, fettuccine, fusilli, lasagne sheets, linguine, mafaldina, shells, elbows, vermicelli, ravioli, raviolini, agnolotti, pansotti, cappeletti, tortellini, gnocchi, cannelloni, couscous and manicotti.

**13.** A method according to claim 1 or claim 2 wherein the pasta or pasta product is a pasta product comprising pasta in juxtaposition with a composition, such as a filling or sauce composition.

**14.** A method according to claim 13 wherein the pasta or pasta product is a filled pasta product.

**15.** A method according to claim 13 wherein the filled pasta product is selected from one or more of the groups consisting of: ravioli, raviolini, agnolotti, pansotti, cappeletti, tortellini, gnocchi, cannelloni, and manicotti.

**16.** A method according to claim 13 wherein the composition comprises at least one emulsifier and at least one edible fibre.

**17.** A method according to claim 16 wherein the composition additionally comprises an emulsifier improver.

**18.** A method according to claim 1 or claim 2 wherein the pasta or pasta product is a dried pasta or pasta product.

**19.** The use of an effective amount of an oxidoreductase which is at least capable of oxidising a carbohydrate in pasta or pasta dough, whereby said oxidoreductase provides the technical effect of improving the hydration of the pasta or of a pasta product made from said pasta or said pasta dough.

**20.** The use according to claim 19 wherein the carbohydrate is maltose

**21.** The use according to claim 19 wherein the oxidoreductase is a hexose oxidase.

**22.** The use according to claim 19 wherein in addition to the oxidoreductase an emulsifying agent or a lipolytic enzyme is added to the dough.

**23.** The use according to claim 19 wherein in addition to the oxidoreductase an emulsifying agent and a lipolytic enzyme is added to the dough.

**24.** The use according to claim 19 wherein the rate of hydration is improved.

**25.** The use according to claim 24 wherein the optimal cooking time is reduced by at least 5%.

**26.** The use according to claim 19 wherein the quality of hydration is improved.

**27.** The use according to claim 26 wherein the evenness of the hydration is improved.

**28.** The use according to claim 26 wherein the texture or mouthfeel of the hydrated pasta is improved.

**29.** The use according to claim 19 wherein the pasta or pasta product is selected from one or more of the groups consisting of: fusilli, spaghetti, bucatini, fettuccine, fusilli, lasagne sheets, linguine, mafaldina, shells, elbows, vermicelli, ravioli, raviolini, agnolotti, pansotti, cappeletti, tortellini, gnocchi, cannelloni, couscous and manicotti.

**30.** The use according to claim 19 wherein the pasta or pasta product is a pasta product comprising pasta in juxtaposition with a composition, such as a filling or sauce composition.

**31.** The use according to claim 30 wherein the pasta or pasta product is a filled pasta product.

**32.** The use according to claim 31 wherein the filled pasta product is selected from one or more of the groups consisting of: ravioli, raviolini, agnolotti, pansotti, cappeletti, tortellini, gnocchi, cannelloni, and manicotti.

**33.** The use according to claim 30 wherein the composition comprises at least one emulsifier and at least one edible fibre.

**34.** The use according to claim 33 wherein the composition additionally comprises an emulsifier improver.

**35.** The use according to claim 19 wherein the pasta or pasta product is a dried pasta or pasta product.

## Patentansprüche

**1.** Verfahren zur Verbesserung der Hydratisierung von Teigwaren oder Teigwarenprodukten, welches das Hinzufügen einer wirksamen Menge einer Oxidoreduktase, die wenigstens in der Lage ist, ein Kohlenhydrat zu oxidieren, zu den Teigwaren oder zu den Teigzutaten von Teigwaren oder zum Teig von Teigwaren umfaßt.

2. Verfahren zur Herstellung von Teigwaren oder eines Teigwarenprodukts mit verbesserter Hydratisierung, wobei eine Oxidoreduktase, die wenigstens in der Lage ist, ein Kohlenhydrat zu oxidieren, zu Teig oder den Teigzutaten von Teigwaren oder zum Teig von Teigwaren in einer wirksamen Menge zugegeben wird, so daß, wenn die Teigwaren oder aus dem Teig der Teigwaren oder aus den Teigzutaten hergestellte Teigwaren oder ein aus den Teigwaren oder den Teigzutaten der Teigwaren oder dem Teig der Teigwaren hergestelltes Teigwarenprodukt gekocht werden, die Hydratisierung der Teigwaren oder des Teigwarenprodukts im Vergleich zu Teigwaren oder einem Teigwarenprodukt ohne die Oxidoreduktase verbessert wird.

3. Verfahren nach Anspruch 1 oder Anspruch 2, wobei das Kohlenhydrat Maltose ist.

4. Verfahren nach Anspruch 1 oder Anspruch 2, wobei die Oxidoreduktase eine Hexoseoxidase ist.

5. Verfahren nach Anspruch 1 oder Anspruch 2, wobei zusätzlich zu der Oxidoreduktase ein Emulgiermittel oder ein fettspaltendes Enzym zu dem Teig zugegeben wird.

6. Verfahren nach Anspruch 1 oder Anspruch 2, wobei zusätzlich zu der Oxidoreduktase ein Emulgiermittel und ein fettspaltendes Enzym zu dem Teig zugegeben werden.

7. Verfahren nach Anspruch 1 oder Anspruch 2, wobei die Hydratisierungsrate verbessert wird.

8. Verfahren nach Anspruch 7, wobei die optimale Kochzeit um wenigstens 5% reduziert wird.

9. Verfahren nach Anspruch 1 oder Anspruch 2, wobei die Qualität der Hydratisierung verbessert wird.

10. Verfahren nach Anspruch 9, wobei die Gleichmäßigkeit der Hydratisierung verbessert wird.

11. Verfahren nach Anspruch 9, wobei die Textur oder das Mundgefühl der hydratisierten Teigwaren verbessert wird.

12. Verfahren nach Anspruch 1 oder Anspruch 2, wobei die Teigwaren oder das Teigwarenprodukt aus einer oder mehrerer der Gruppen ausgewählt ist, bestehend aus: Fusilli, Spaghetti, Tagliatelle, Bucatini, Fettuccine, Fusilli, Lasagneblättern, Linguine, Mafaldina, Muscheln, Hörnchen, Vermicelli, Ravioli, Raviolini, Agnolotti, Pansotti, Cappeletti, Tortellini, Gnocchi, Cannelloni, Couscous und Manicotti.

13. Verfahren nach Anspruch 1 oder Anspruch 2, wobei die Teigware oder das Teigwarenprodukt ein Teigwarenprodukt ist, welches neben Pasta eine Zusammensetzung, wie eine Füllungs-oder Soßenzusammensetzung, umfaßt.

14. Verfahren nach Anspruch 13, wobei die Teigware oder das Teigwarenprodukt ein gefülltes Teigwarenprodukt ist.

15. Verfahren nach Anspruch 13, wobei das gefüllte Teigwarenprodukt aus einer oder mehrerer der Gruppen ausgewählt ist, bestehend aus: Ravioli, Raviolini, Agnolotti, Pansotti, Cappeletti, Tortellini, Gnocchi, Cannelloni und Manicotti.

16. Verfahren nach Anspruch 13, wobei die Zusammensetzung wenigstens einen Emulgator und wenigstens eine eßbare Faser enthält.

17. Verfahren nach Anspruch 16, wobei die Zusammensetzung zusätzlich einen Emulgationsverbesserer umfaßt.

18. Verfahren nach Anspruch 1 oder Anspruch 2, wobei die Teigware oder das Teigwarenprodukt eine getrocknete Teigware oder ein getrocknetes Teigwarenprodukt ist.

19. Verwendung einer wirksamen Menge einer Oxidoreduktase, die wenigstens in der Lage ist, ein Kohlenhydrat in Teigwaren oder dem Teig von Teigwaren zu oxidieren, wobei die Oxidoreduktase die technische Wirkung einer Verbesserung der Hydratisierung der Teigware oder eines aus der Teigware oder aus dem Teig der Teigware hergestellten Teigwarenprodukts mit sich bringt.

20. Verwendung nach Anspruch 19, wobei das Kohlenhydrat Maltose ist.

21. Verwendung nach Anspruch 19, wobei die Oxidoreduktase eine Hexoseoxidase ist.

**22.** Verwendung nach Anspruch 19, wobei zusätzlich zu der Oxidoreduktase ein Emulgiermittel oder ein fettspaltendes Enzym zu dem Teig zugegeben wird.

**23.** Verwendung nach Anspruch 19, wobei zusätzlich zu der Oxidoreduktase ein Emulgiermittel und ein fettspaltendes Enzym zu dem Teig zugegeben werden.

**24.** Verwendung nach Anspruch 19, wobei die Hydratisierungsrate verbessert wird.

**25.** Verwendung nach Anspruch 24, wobei die optimale Kochzeit um wenigstens 5% reduziert wird.

**26.** Verwendung nach Anspruch 19, wobei die Qualität der Hydratisierung verbessert wird.

**27.** Verwendung nach Anspruch 26, wobei die Gleichmäßigkeit der Hydratisierung verbessert wird.

**28.** Verwendung nach Anspruch 26, wobei die Textur oder das Mundgefühl der hydratisierten Teigware verbessert wird.

**29.** Verwendung nach Anspruch 19, wobei die Teigware oder das Teigwarenprodukt aus einer oder mehrerer der Gruppen ausgewählt ist, bestehend aus: Fusilli, Spaghetti, Bucatini, Fettuccine, Fusilli, Lasagneblättern, Linguine, Mafaldina, Muscheln, Hörnchen, Vermicelli, Ravioli, Raviolini, Agnolotti, Pansotti, Cappeletti, Tortellini, Gnocchi, Cannelloni, Couscous und Manicotti.

**30.** Verwendung nach Anspruch 19, wobei die Teigware oder das Teigwarenprodukt ein Teigwarenprodukt ist, welches neben Pasta eine Zusammensetzung, wie z.B. eine Füllungs- oder Soßenzusammensetzung, umfaßt.

**31.** Verwendung nach Anspruch 30, wobei die Teigware oder das Teigwarenprodukt ein gefülltes Teigwarenprodukt ist.

**32.** Verwendung nach Anspruch 31, wobei das gefüllte Teigwarenprodukt aus einer oder mehrerer der Gruppen ausgewählt ist, bestehend aus: Ravioli, Raviolini, Agnolotti, Pansotti, Cappeletti, Tortellini, Gnocchi, Cannelloni und Manicotti.

**33.** Verwendung nach Anspruch 30, wobei die Zusammensetzung wenigstens einen Emulgator und wenigstens eine eßbare Faser umfaßt.

**34.** Verwendung nach Anspruch 33, wobei die Zusammensetzung zusätzlich einen Emulgationsverbesserer umfaßt.

**35.** Verwendung nach Anspruch 19, wobei die Teigware oder das Teigwarenprodukt eine getrocknete Teigware oder ein getrocknetes Teigwarenprodukt ist.

## Revendications

**1.** Procédé pour améliorer l'hydratation de pâtes alimentaires ou de produits à base de pâtes alimentaires, comprenant l'addition aux pâtes alimentaires ou aux ingrédients de la pâte à pâtes alimentaires ou à la pâte à pâtes alimentaires d'une quantité efficace d'une oxydoréductase qui est au moins capable d'oxyder un glucide.

**2.** Procédé pour la préparation de pâtes alimentaires ou d'un produit à base de pâtes alimentaires ayant une hydratation améliorée, par lequel une oxydoréductase qui est au moins capable d'oxyder un glucide est ajoutée en une quantité efficace aux pâtes alimentaires ou aux ingrédients de la pâte à pâtes alimentaires ou à la pâte à pâtes alimentaires, de sorte que, lorsque les pâtes alimentaires ou les pâtes alimentaires fabriquées à partir de ladite pâte à pâtes alimentaires ou desdits ingrédients de la pâte à pâtes alimentaires ou un produit à base de pâtes alimentaires fabriqué à partir desdites pâtes alimentaires ou desdits ingrédients de la pâte à pâtes alimentaires ou de ladite pâte à pâtes alimentaires sont cuits, l'hydratation des pâtes alimentaires ou du produit à base de pâtes alimentaires soit améliorée comparativement à des pâtes alimentaires ou à un produit à base de pâtes alimentaires ne contenant pas ladite oxydoréductase.

**3.** Procédé selon la revendication 1 ou la revendication 2, dans lequel le glucide est le maltose.

**4.** Procédé selon la revendication 1 ou la revendication 2, dans lequel l'oxydoréductase est une hexose-oxydase.

**5.** Procédé selon la revendication 1 ou la revendication 2, dans lequel, en plus de l'oxydoréductase, un émulsifiant ou une enzyme lipolytique est ajouté à la pâte.

**6.** Procédé selon la revendication 1 ou la revendication 2, dans lequel, en plus de l'oxydoréductase, un émulsifiant et une enzyme lipolytique sont ajoutés à la pâte.

**7.** Procédé selon la revendication 1 ou la revendication 2, dans lequel la vitesse d'hydratation est améliorée.

**8.** Procédé selon la revendication 7, dans lequel le temps de cuisson optimal est réduit d'au moins 5 %.

**9.** Procédé selon la revendication 1 ou la revendication 2, dans lequel la qualité d'hydratation est améliorée.

**10.** Procédé selon la revendication 9, dans lequel l'uniformité de l'hydratation est améliorée.

**11.** Procédé selon la revendication 9, dans lequel la texture ou la sensation en bouche des pâtes alimentaires hydratées est améliorée.

**12.** Procédé selon la revendication 1 ou la revendication 2, dans lequel les pâtes alimentaires ou le produit à base de pâtes alimentaires sont choisis parmi un ou plusieurs des groupes consistant en : fusilli, spaghetti, tagliatelles, bucatini, fettucine, fusilli, feuilles de lasagnes, linguine, mafaldina, coquilles, coquillettes, vermicelle, ravioli, raviolini, agnolotti, pansotti, cappeletti, tortellini, gnocchi, cannelloni, couscous et manicotti.

**13.** Procédé selon la revendication 1 ou la revendication 2, dans lequel les pâtes alimentaires ou le produit à base de pâtes alimentaires sont un produit à base de pâtes alimentaires comprenant des pâtes alimentaires en juxtaposition avec une composition telle qu'une composition de garniture ou de sauce.

**14.** Procédé selon la revendication 13, dans lequel les pâtes alimentaires ou le produit à base de pâtes alimentaires sont un produit à base de pâtes alimentaires fourré.

**15.** Procédé selon la revendication 13, dans lequel le produit à base de pâtes alimentaires fourré est choisi parmi un ou plusieurs des groupes consistant en : ravioli, raviolini, agnolotti, pansotti, cappeletti, tortellini, gnocchi, cannelloni et manicotti.

**16.** Procédé selon la revendication 13, dans lequel la composition comprend au moins un émulsifiant et au moins une fibre comestible.

**17.** Procédé selon la revendication 16, dans lequel la composition comprend de plus un agent d'amélioration pour émulsifiant.

**18.** Procédé selon la revendication 1 ou la revendication 2, dans lequel les pâtes alimentaires ou le produit à base de pâtes alimentaires sont des pâtes alimentaires séchées ou un produit à base de pâtes alimentaires séché.

**19.** Utilisation d'une quantité efficace d'une oxydoréductase qui est au moins capable d'oxyder un glucide dans des pâtes alimentaires ou une pâte à pâtes alimentaires, par laquelle ladite oxydoréductase exerce l'effet technique d'améliorer l'hydratation des pâtes alimentaires ou d'un produit à base de pâtes alimentaires fabriqué à partir desdites pâtes alimentaires ou de ladite pâte à pâtes alimentaires.

**20.** Utilisation selon la revendication 19, dans laquelle le glucide est le maltose.

**21.** Utilisation selon la revendication 19, dans laquelle l'oxydoréductase est une hexose-oxydase.

**22.** Utilisation selon la revendication 19, dans laquelle, en plus de l'oxydoréductase, un émulsifiant ou une enzyme lipolytique est ajouté à la pâte.

**23.** Utilisation selon la revendication 19, dans laquelle, en plus de l'oxydoréductase, un émulsifiant et une enzyme lipolytique sont ajoutés à la pâte.

**24.** Utilisation selon la revendication 19, dans laquelle la vitesse d'hydratation est améliorée.

**25.** Utilisation selon la revendication 24, dans laquelle le temps de cuisson optimal est réduit d'au moins 5 %.

**26.** Utilisation selon la revendication 19, dans laquelle la qualité d'hydratation est améliorée.

**27.** Utilisation selon la revendication 26, dans laquelle l'uniformité d'hydratation est améliorée.

**28.** Utilisation selon la revendication 26, dans laquelle la texture ou la sensation en bouche des pâtes alimentaires hydratées est améliorée.

**29.** Utilisation selon la revendication 19, dans laquelle les pâtes alimentaires ou le produit à base de pâtes alimentaires sont choisis parmi un ou plusieurs des groupes consistant en : fusilli, spaghetti, bucatini, fettucine, fusilli, feuilles de lasagnes, linguine, mafaldina, coquilles, coquillettes, vermicelle, ravioli, raviolini, agnolotti, pansotti, cappeletti, tortellini, gnocchi, cannelloni, couscous et manicotti.

**30.** Utilisation selon la revendication 19, dans laquelle les pâtes alimentaires ou le produit à base de pâtes alimentaires sont un produit à base de pâtes alimentaires comprenant des pâtes alimentaires en juxtaposition avec une composition, telle qu'une composition de garniture ou de sauce.

**31.** Utilisation selon la revendication 30, dans laquelle les pâtes alimentaires ou le produit à base de pâtes alimentaires sont un produit à base de pâtes alimentaires fourré.

**32.** Utilisation selon la revendication 31, dans lequel le produit à base de pâtes alimentaires fourré est choisi parmi un ou plusieurs des groupes consistant en : ravioli, raviolini, agnolotti, pansotti, cappeletti, tortellini, gnocchi, cannelloni et manicotti.

**33.** Utilisation selon la revendication 30, dans laquelle la composition comprend au moins un émulsifiant et au moins une fibre comestible.

**34.** Utilisation selon la revendication 33, dans laquelle la composition comprend de plus un agent d'amélioration pour émulsifiant.

**35.** Utilisation selon la revendication 19, dans laquelle les pâtes alimentaires ou le produit à base de pâtes alimentaires sont des pâtes alimentaires séchées ou un produit à base de pâtes alimentaires séché.

**FIGURE 1**

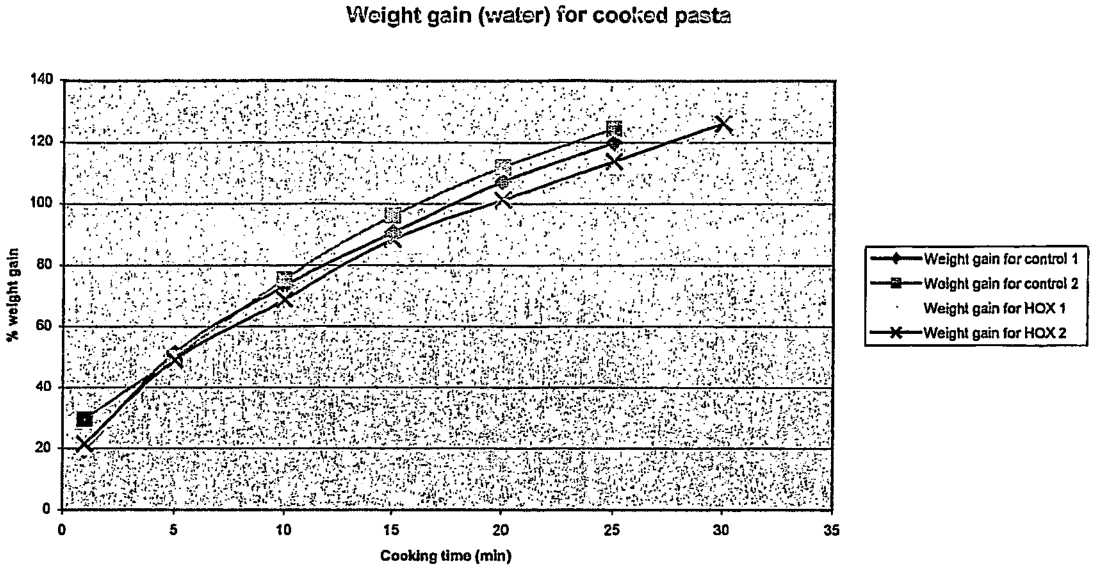
Weight gain (water) for cooked pasta
140
120
100
80
60
40
20
0
% weight gain
0
5
10
15
20
25
30
35
Cooking time (min)
Weight gain for control 1
Weight gain for control 2
Weight gain for HOX 1
Weight gain for HOX 2

FIGURE 2

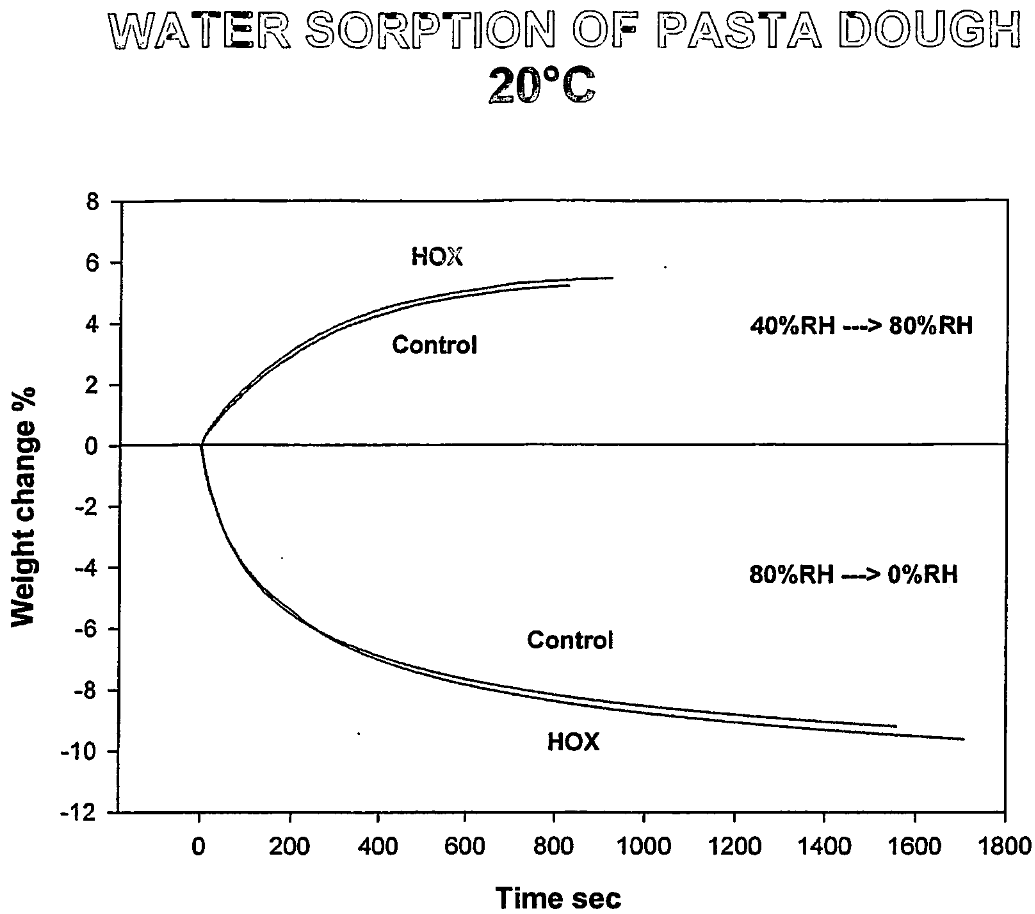
WATER SORPTION OF PASTA DOUGH
20°C
HOX
Control
40%RH ---> 80%RH
80%RH ---> 0%RH
Control
HOX
Weight change %
8
6
4
2
0
-2
-4
-6
-8
-10
-12
0
200
400
600
800
1000
1200
1400
1600
1800
Time sec